# EUROPEAN PATENT SPECIFICATION

(11) **EP 0 614 715 B1**
(45) Date of publication and mention of the grant of the patent: **31.03.1999**
(21) Application number: 93921081.1
(22) Date of filing: 29.09.1993
(51) Int. Cl.: B22F 3/24, B22F 5/08, C23C 26/00, B23F 15/00, F16H 55/06, C23C 22/03, C10M 125/24, B22F 3/26

(54) **WHEEL SPEED MEASURING GEAR AND METHOD OF MANUFACTURING THE SAME**
MESSGETRIEBE ZUR MESSUNG DER RADGESCHWINDIGKEIT UND DESSEN HERSTELLUNG
TRANSMISSION POUR LA MESURE DE LA VITESSE D'UNE ROUE ET PROCEDE POUR SA FABRICATION

(30) Priority: 30.09.1992 JP 261124/92; 24.09.1993 JP 237726/93
(43) Date of publication of application: 14.09.1994
(73) Proprietor: SUMITOMO ELECTRIC INDUSTRIES, LIMITED, Osaka 541 (JP)
(72) Inventor: UEDA, Hiroshi Itami Works, Sumitomo Electric Ind., Itami-shi Hyogo 664 (JP); INUI, Naoki Itami Works of Sumitomo Electric Ind., Itami-shi Hyogo 664 (JP); TAKEDA, Yoshinobu Itami Works, 1-chome Itami-shi Hyogo 664 (JP)
(74) Representative: Herrmann-Trentepohl, Werner, Dipl.-Ing.
(86) International application number: PCT/JP93/01385
(87) International publication number: WO 94/07630

(56) References cited:
- WO-A-82/04444
- JP-A-60 106 960
- JP-A-60 121 278
- JP-A-60 194 085
- US-A- 2 935 432
- US-A- 4 698 269
- DATABASE WPI Week 8925, Derwent Publications Ltd., London, GB; AN 89-182876 & JP-A-1 121 389 (NIPPON STAINLESS) 15 May 1989
- DATABASE WPI Week 8639, Derwent Publications Ltd., London, GB; AN 86-256551 & RO-A-88 592 (INTR LIVRAREA PROD) 31 March 1986
- PATENT ABSTRACTS OF JAPAN vol. 11, no. 43 (C-402) (2490) 7 February 1987 & JP-A-61 207 578 (HITACHI LTD) 13 September 1986
- Microfilm of the specification and drawings annexed to the written application of Japanese Utility Model Application No. 190484/1983; & JP,U,60 097 450 (Mitsubishi Electric Corp.), July 3, 1985 (03.07.85), page 1 (Family: none).
- Microfilm of the specification and drawings annexed to the written application of Japanese Utility Model Application No. 37444/1984; & JP,U,60 149 557 (Mitsubishi Electric Corp.), page 1 (Family: none).

## Description

### Technical Field of the Invention

The present invention relates to a gear for wheel speed detection (hereinafter referred to as a sensor ring) which is applied to an electronically controlled anti-locking brake system (hereinafter referred to as ABS) for an automobile and a method of manufacturing the same.

### Background Art

In recent years, development of a safer system having high reliability has been progressed in relation to a disc brake system for an automobile, following increase in social requirement for stability of an automobile. Due to rapid development and cost reduction in microelectronics, in particular, an ABS for preventing wheels from slip in abrupt braking on a frozen or wet road for preventing an accident is now starting to prevail in parts of automobiles. However, a high economic advantage is required for parts forming the ABS in addition to high performance and reliability, and there still remain a number of problems to be solved.

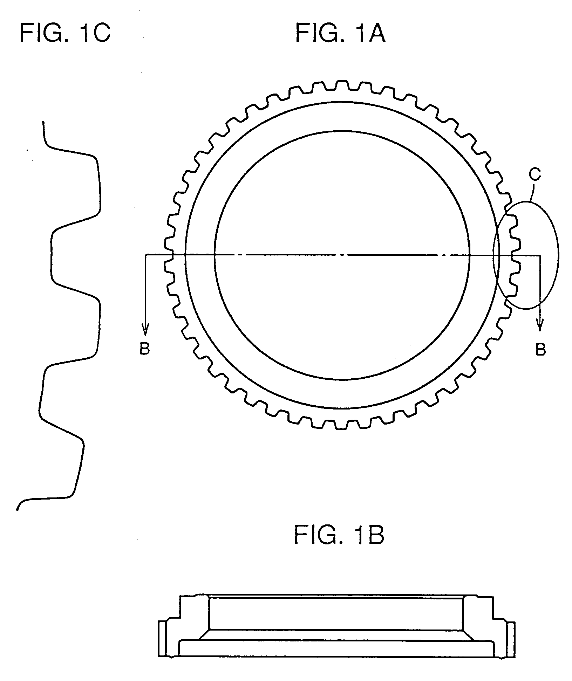

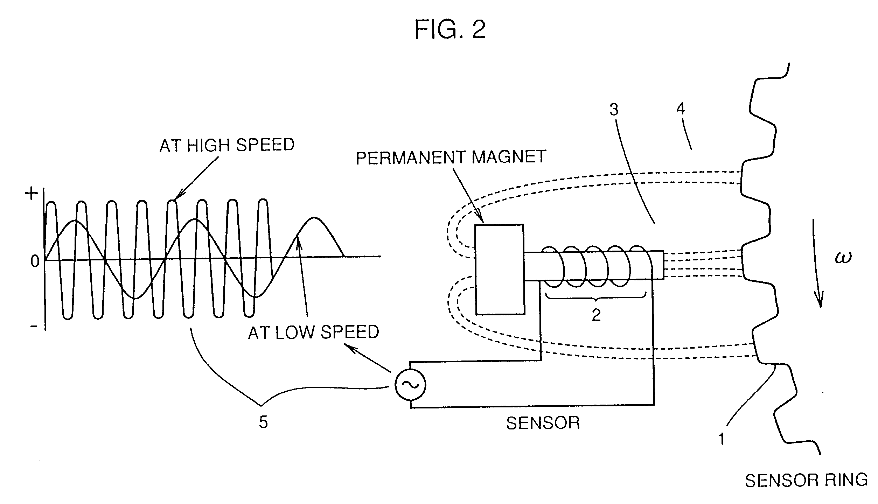

As to a wheel speed detecting part which is the core of the ASS, an electromagnetic system having excellent environment resistance is now employed. A sensor ring of a magnetic material having a gear shaped surface of high gear tooth pitch accuracy is employed for this detecting system. Fig. 1A is a front elevational view of a sensor ring, Fig. 1B is a sectional view taken along the line B - B in Fig. 1A, and Fig. 1C is an enlarged view showing a portion C in Fig. 1A. Fig. 2 is a diagram showing an operation principle of electromagnetic wheel speed detection utilizing the sensor ring shown in Fig. 1A.

As shown in Fig. 2, the sensor ring 1 is mounted on a wheel to have a constant clearance between a pole piece 3 of a sensor coil 2 and each tip of the sensor ring 1. The electromagnetic coil 2 receives magnetic flux change which is caused in the clearance with rotation of the wheel, to detect an excited output voltage 5 and correctly read the speed of each wheel. The ABS correctly operates on the basis of the speed of each wheel as measured, to control the brake so that the wheel is locked and will not slip.

For a material for this sensor ring, excellent corrosion resistance is required in addition to magnetic properties as output characteristics and pitch accuracy of teeth. Particularly as to a mounting system for the sensor ring, a drive shaft direct mounting type is desired. The drive shaft direct mounting type is so simple in structure that the sensor ring can be easily mounted, easy to maintain, and at a low cost. In such a drive shaft direct mounting type sensor ring, however, the surface of the sensor ring is exposed to the exterior. Therefore, requirement of corrosion resistance for the sensor ring is so strict that a sensor ring having desired corrosion resistance has not yet been obtained. Namely, a sensor ring material cannot be put into practice unless the same can withstand salt water corrosion caused by salt which is scattered on the road.

In response to the aforementioned requirement for corrosion resistance, ingot metallurgical stainless steel was first regarded as one of possible materials for the sensor ring. However, high dimensional accuracy is required for the sensor ring and hence remarkable material loss results from machining work if ingot metallurgical stainless steel is employed, to increase the working cost. Therefore, it is rather advantageous to employ a ferrous sintered material having small material loss, which can ensure dimensional accuracy at a low cost.

As to the sintered material, sintered stainless steel having corrosion resistance itself has been employed, or a ferrous sintered material provided with corrosion resistance by surface treatment or sintered stainless steel subjected to surface corrosion resistance treatment has been studied.

From WO-A-820 444 a method is known for reducing corrosion on interior surfaces of a stainless steel filter which is used for food or drink, e. g. whisky. For suppressing corrosion on the interior surfaces these interior surfaces are treated with a phosphorous-containing solution which may be a solution of phosphoric acid containing iron phosphates.

Even with reduced corrosion on interior surfaces of a sintered material, however, salt water might enter the bulk of the sintered material through pores and can, thus, cause corrosion problems.

When surface treatment such as plating treatment is performed on the surface of such a sintered material, therefore, the plating liquid penetrating into the interiors of the pores disadvantageously exudes on the surface, or remains in the interior of the material to cause rust. In order to seal the pores of the sintered material, therefore, sealing treatment by impregnation with resin, copper infiltration or steam treatment, which has been applied to a machine part, has also been studied. However, there have been problems such as increase in manufacturing cost and deterioration of output voltage characteristics caused by such surface treatment.

As a method of covering only the surface without employing a solution, there has been proposed a method of combining the so-called DECROTIZE treatment (registered trademark) for bonding zinc powder with a binder of chromate anhydride and steam sealing treatment of a base, and put into practice. When such surface treatment is performed, however, the coating layer may be separated during employment similarly to plating treatment and cannot attain the object of corrosion resistance. Even if such a coating layer is separated, it is of course possible to attain the object of corrosion resistance by preparing the base from sintered stainless steel. When the base is prepared from sintered stainless steel and subjected to the aforementioned surface treatment, however, the manufacturing cost is increased in both of the material and the working steps, and it is difficult to industrially produce the sensor ring.

As hereinabove described, the conventional sensor rings have various problems, and a material for a sensor ring which is at a lower cost and provided with higher corrosion resistance is awaited.

### Disclosure of the Invention

Accordingly, an object of the present invention is to provide a gear for wheel speed detection which is at a lower cost and superior in corrosion resistance and a method of manufacturing the same.

The inventive gear for wheel speed detection as defined in claim 1, has a surface layer part containing at least 5 atomic % and not more than 25 atomic % of phosphorus, at least 30 atomic % and not more than 70 atomic % of oxygen, and at least 5 atomic % and not more than 50 atomic % of iron, and at least partially consisting of an amorphous phase, with a rest which is made of sintered stainless steel.

According to the inventive method of manufacturing a gear for wheel speed detection, raw material powder is compacted and thereafter sintered for preparing a sintered stainless steel product. This sintered stainless steel product is dipped in oil of at least 15°C and not more than 70°C in temperature containing phosphoric acid groups. Thus, a surface layer part containing at least 5 atomic % and not more than 25 atomic % of phosphorus, at least 30 atomic % and not more than 70 atomic % of oxygen, and at least 5 atomic % and not more than 50 atomic % of iron and at least partially consisting of an amorphous phase is formed on the sintered stainless steel product.

According to a preferred method of manufacturing a gear for wheel speed detection in the present invention, the oil containing phosphoric acid groups is employed as lubricating oil for corrective sizing, to improve manufacturing efficiency of the gear for wheel speed detection by continuously carrying out dipping in the oil and corrective sizing.

As to the composition, the sintered stainless steel product serving as the main material for the sensor ring according to the present invention may simply have magnetism and ductility which are similar to those of electromagnetic stainless steel. For example, a ferrite system or martensite system material consisting of 7 to 27 % of chromium in weight ratio and a rest of iron and unavoidable impurities, or a material prepared by adding not more than 5 % of molybdenum and not more than 2 % of silicon thereto in response to magnetic properties is preferable.

Sintered stainless steel is superior in corrosion resistance to an ordinary ferrous sintered material having a small content of chromium or nickel, due to rust preventing action of a dense oxide film of a surface layer. However, the sintered stainless steel is inferior in corrosion resistance to ingot metallurgical stainless steel, due to presence of pores.

In the sintered stainless steel, further, the surface layer part is easy to rust due to loss of chromium. In order to put a sensor ring of sintered stainless steel into practice, therefore, it is necessary to form a coating layer which is excellent in corrosion resistance to such a degree that the same can withstand salt water and has strong adhesion to a base.

In order to improve corrosion resistance of the aforementioned sintered stainless steel, the inventors have made intensive study to find that the object of improving corrosion resistance can be attained by dipping the sintered stainless steel in oil of a prescribed temperature containing phosphoric acid groups for bringing its surface layer part into a prescribed composition.

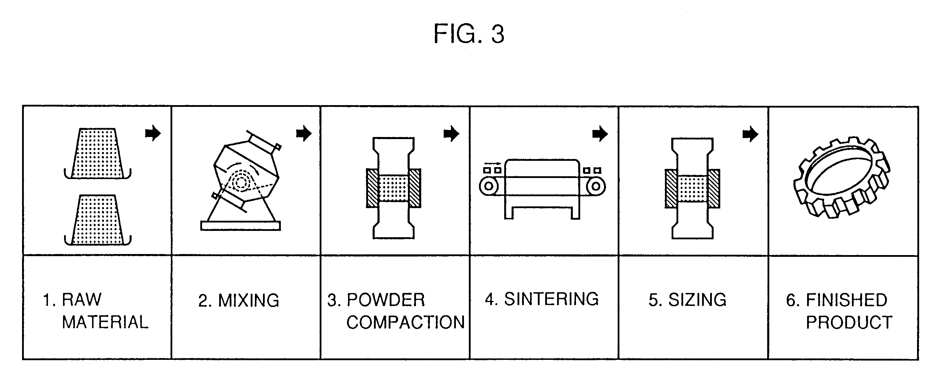

The inventive sensor ring which is mainly made of sintered stainless steel is manufactured along basic steps shown in Fig. 3. Fig. 3 typically illustrates steps of manufacturing the inventive sensor ring. First, respective powder materials are prepared as raw materials for sintered stainless steel. These powder materials are mixed with each other and compacted into a prescribed shape. The as-obtained compact is sintered. This sintered body is dipped in an oil reservoir, so that the surface of the sintered body is coated with oil containing prescribed phosphoric acid groups. Thereafter the sintered body is sized with a die of a prescribed shape, to be finished in the form of a ring having a gear as shown in Fig. 1. Then, the oil is completely removed by degreasing, to obtain the sensor ring as a finished product.

The dipping in the oil containing phosphoric acid groups may be carried out immediately after the sintering, or may be carried out in the sizing by using the oil as lubricating oil. Further, a similar effect is also attained by carrying out the treatment of dipping in the oil containing phosphoric acid groups after the sizing. The temperature of the oil is preferably at least 15°C and not more than 70°C. If the temperature of the oil is less than 15°C, viscosity of the oil is so unpreferably increased that it is difficult for the oil to permeate into pores from the surface layer. If the temperature of the oil exceeds 70°C, on the other hand, the amount of the oil adhering to the surface layer part is so unpreferably reduced that the lubricating effect is reduced when the sizing is continuously carried out. The time for the treatment of dipping in the oil is sufficiently within several minutes at the most, and a stable surface layer is generally formed within 1 minute.

When the surface of sintered stainless steel treated in the aforementioned manner is analyzed by X-ray diffraction and ESCA (electron spectroscopy for chemical analysis), a compound layer which is mainly composed of phosphorus, iron and oxygen and partially consists of an amorphous phase is detected on its surface layer. When a salt spray corrosion test by JIS-Z2371 is made on the treated sintered stainless steel, development of reddish rust on the surface is extremely small as compared with untreated one, as shown in Examples described later. When the sensor ring is mounted on a wheel for measurement of output voltage characteristics, further, deterioration of its characteristics is also extremely small. This is conceivably because the aforementioned surface layer which is formed by reaction between the heated oil containing phosphoric acid groups and the base material of sintered stainless steel forms a waterproof and acidproof passive state, to be chemically stabilized.

In the composition of the surface layer, phosphorus is set at 5 to 25 atomic %, oxygen is set at 30 to 70 atomic % and iron is set at 5 to 50 atomic % since no desirable coat having an amorphous phase is formed or the rust preventing effect is reduced to the contrary in a composition out of the aforementioned ranges. Reduction of the rust preventing effect/corrosion resistance is conceivably influenced by rates of an amorphous phase and a crystalline phase in the former and by formation of iron hydroxide etc. caused by incorporation of impurities/moisture etc. in the latter.

In surface grain boundaries of vacuum-sintered stainless steel and surfaces of pores, chromium concentration is reduced by vaporization of chromium components under the vacuum. In a sintered state, therefore, acid resistance and water resistance in these portions are reduced. When surface treatment is performed in accordance with the present invention, however, the aforementioned passive state layer is formed on the surface of the sintered stainless steel, so that acid resistance and water resistance are also improved in vacuum-sintered stainless steel.

The as-formed surface layer part becomes a dense and fine layer. This layer is formed by partial change of components of the sintered stainless steel due to chemical reaction, and causes no problem in relation to adhesion in the interface between the same and the base, dissimilarly to a plating layer and a DECROTIZE layer.

Further, the aforementioned surface layer part can be formed by simple treatment, whereby no high-priced one is required also in equipment as compared with a conventional surface treatment method. Further, the treatment is performed in a short time, whereby continuation and automation are also enabled.

In particular, the oil which is employed in formation of the surface layer part may be applied to lubricating oil for corrective sizing. In this case, surface treatment is enabled simultaneously with the sizing, when surface reaction is caused while employing temperature increase of the sintered body in the sizing as such. Thus, continuation of the manufacturing steps is simplified and productivity is improved.

While the present invention is now described with reference to Examples, the inventive sensor ring and the method of manufacturing the same are not restricted to the following Examples.

### Brief Description of the Drawings

Figs. 1A, 1B and 1C are a front elevational view, a sectional view and an enlarged view showing an example of a gear for wheel speed detection (sensor ring) according to the present invention.
Fig. 2 typically illustrates an operation principle of electromagnetic wheel speed detection utilizing the sensor ring.
Fig. 3 is a process drawing showing steps of manufacturing the sensor ring according to the present invention.
Fig. 4 is a graph showing a result of X-ray diffraction of a surface layer part of a sensor ring member according to the present invention.
Figs. 5A, 5B and 5C are graphs showing results of ESCA analysis of the surface layer of the sensor ring member according to the present invention.

### Best Modes for Carrying Out the Invention

### Example 1

Five types of samples Nos. 1 to 5 were prepared for each of a ring-shaped product (shape A) of 40 mm in outer diameter, 25 mm in inner diameter and 5 mm in thickness, and a sensor ring-shaped product (shape B) of 90 mm in outer diameter, 84 mm in inner diameter and 10 mm in thickness with 44 external teeth, as shown in Table 1. Compositions of base materials of the respective samples, methods of manufacturing the base materials and surface treatment methods are shown in Table 1.

**Table 1**

| Sample No. | Composition of Base Material | Method of Preparing Base Material | Surface Treatment | | |
|---|---|---|---|---|---|
| | | | Time of Treatment | Treatment Temperature | Treatment Time |
| 1 | Corresponding to SUS434 | Sintering (Vacuum Sintered) | Immediately after Sintering | 50°C | 1 min. |
| 2 | " | " | Immediately before Sizing | " | " |
| 3 | " | " | Immediately after Sizing | " | " |
| 4 | " | " | No | | |
| 5 | " | Ingot Metallurgy (Machined) | No | | |
| 6 | Corresponding to SUS430 | Sintering (Vacuum Sintered) | Immediately after Sintering | 50°C | 1 min. |
| 7 | " | " | Immediately before Sizing | " | " |
| 8 | " | " | Immediately after Sizing | " | " |
| 9 | " | " | No | | |
| 10 | " | Ingot Metallurgy (Machined) | No | | |
| 11 | Improved SUS434 | Sintering (Vacuum Sintered) | Immediately before Sizing | 50°C | 1 min. |
| 12 | " | " | Immediately after Sizing | " | " |
| 13 | " | " | No | | |
| 14 | Corresponding to SUS434 | Sintering (Hydrogen Sintered) | Immediately before Sizing | 50°C | 1 min. |
| 15 | " | " | Immediately after Sizing | " | " |
| 16 | " | Sintering (Vacuum Sintered) | Immediately before Sizing | 90°C | " |
| 17 | " | " | " | 150°C | " |
| 18 | " | " | " | 50°C | 30 min. |
| 19 | " | " | " | " | 60 min. |
| Note) The improved SUS434 material is an Fe - 18 Cr - 2 Mo - 1 Si alloy. When a sample of the same composition/manufacturing method as the sample No. 16 was carried out at a surface treatment temperature of 13°C, substantially no amorphous phase was formed on its surface. | | | | | |

The samples Nos. 1 to 4 were molded into prescribed shapes utilizing alloy powder materials corresponding to SUS434. The samples No. 5 were cut out from a block of ingot alloy steel corresponding to SUS434 and worked into prescribed shapes.

A salt spray test was made by a method defined in JIS-Z2371, in order to examine corrosion resistance as to both of the shapes A and B. As to the shape A, situations of development of reddish rust after 72 hours, 240 hours and 500 hours were observed in comparison with those before the test, in particular. As to the shape B, a sensor test was carried out on the samples before the salt spray test, after 240 hours and after 500 hours under conditions of a speed of rotation of 40 rpm and a clearance of 0.1 mm between a pole piece and each tip, to measure characteristic values of output voltages. Table 2 shows the results.

**Table 2**

| Sample No. | Salt Spray Test (Shape A Sample) | | | Sensor Output Voltage Characteristics (Shape B Sample) | | | |
|---|---|---|---|---|---|---|---|
| | After 72 Hours | After 240 Hours | After 500 Hours | Before Test | After 240 Hours | After 500 Hours | Deterioration Rate after 500 Hours |
| 1 | 1.5% | 3% | 3.5% | 332mVpp | 332mVpp | 330mVpp | 0.6% |
| 2 | 1 | 2 | 3 | 334 | 333 | 329 | 1.5 |
| 3 | 2 | 4 | 5 | 333 | 333 | 331 | 0.6 |
| 4 | 5 | 80 | 90 | 335 | 300 | 280 | 16.4 |
| 5 | 1 | 6 | 8 | 370 | 364 | 360 | 2.7 |
| 6 | 1.5 | 2 | 5 | 319 | 319 | 317 | 0.6 |
| 7 | 1.5 | 2 | 4 | 321 | 320 | 319 | 0.6 |
| 8 | 1 | 2 | 6 | 322 | 320 | 316 | 1.9 |
| 9 | 8 | 80 | 95 | 320 | 294 | 269 | 15.9 |
| 10 | 2 | 8 | 12 | 365 | 356 | 354 | 3.0 |
| 11 | 0 | 0 | 1.5 | 317 | 318 | 316 | 0.3 |
| 12 | 0 | 1 | 1.5 | 316 | 316 | 314 | 0.6 |
| 13 | 3 | 40 | 60 | 318 | 317 | 315 | 0.9 |
| 14 | 1.5 | 4 | 8 | 330 | 327 | 321 | 2.7 |
| 15 | 1.5 | 5 | 10 | 329 | 328 | 317 | 3.6 |
| 16 | 0 | 1 | 2 | 335 | 334 | 334 | 0.3 |
| 17 | 0 | 1 | 1.5 | 330 | 329 | 328 | 0.6 |
| 18 | 1 | 1.5 | 3 | 332 | 330 | 329 | 0.9 |
| 19 | 1 | 1.5 | 2 | 334 | 334 | 333 | 0.3 |
| Note) Numerical values in the salt spray test show areas of rusted surfaces with respect to surface areas of the shape A samples. The sensor output voltage characteristic values are effective voltage values (mV) outputted by sensors, and deterioration rates show reduction rates of the effective voltage values measured after 500 hours with respect to those before the test. | | | | | | | |

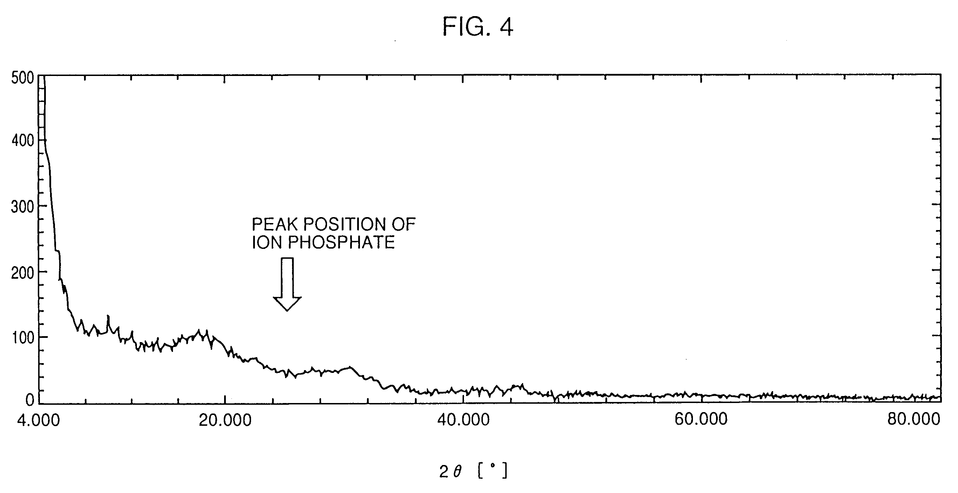

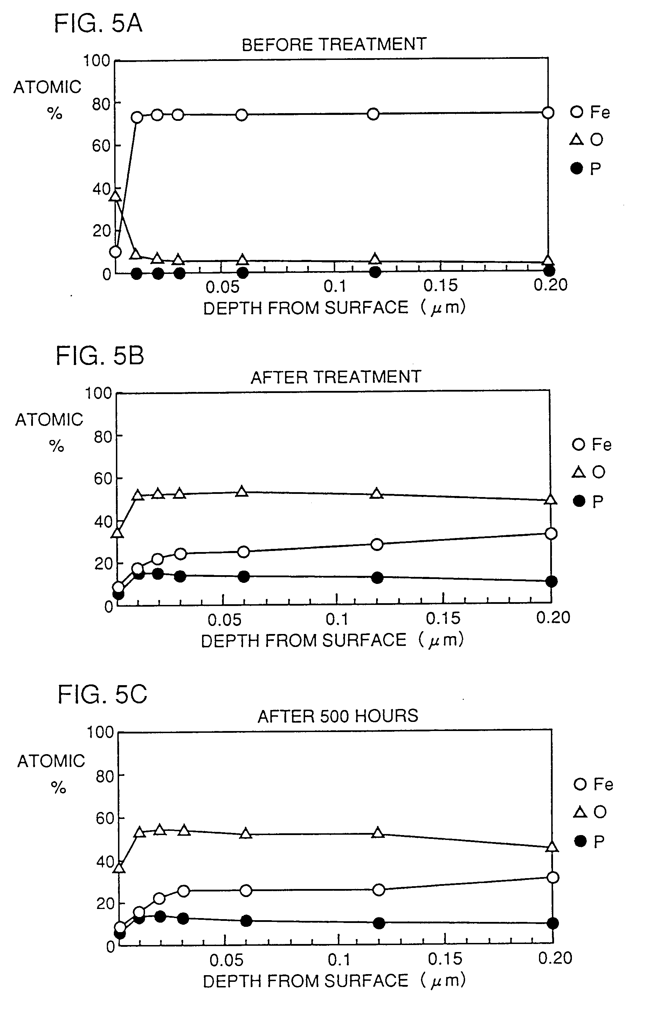

On the other hand, an analysis sample was cut out from the shape A specimen of the sample No. 2, and subjected to identification of products on the surface layer part and elementary analysis. The result of X-ray diffraction is shown in Fig. 4, and the results of analysis by ESCA are shown in Figs. 5A to 5C. Table 3 shows numeric data corresponding to Figs. 5A to 5C.

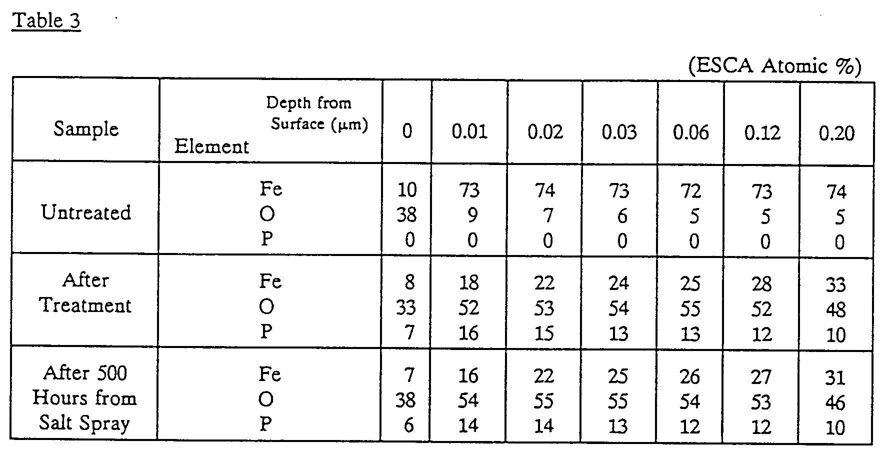

The oil containing phosphoric acid groups was prepared by adding a surface active agent to that containing about 10 % of phosphoric acid groups, about 20 % of fatty acid salt and about 40 % of mineral oil. Dipping in the oil containing phosphoric acid groups was performed at a temperature of 50°C for 1 minute.

As obvious from Table 2, it was recognized as to the sample No. 4 which was not surface treated that corrosion by reddish rust after 240 hours to after 500 hours remarkably progressed as compared with the samples Nos. 1 to 3 which were subjected to oil dipping after vacuum sintering. Also as to the sensor output voltage characteristics, it is understood that the sample No. 4 was extremely deteriorated to 16.4 % while the samples Nos. 1 to 3 exhibited deterioration rates of 0.6 to 1.5 % after 500 hours. Comparing the deterioration rates after 500 hours in the sensor output characteristic test, it is understood that substantially no deterioration of output voltages was recognized as to the samples Nos. 1 to 3 since initial states having substantially no reddish rust were maintained while missing of the surface caused by spreading of reddish rust on the surface progressed as compared with the initial state in the sample No. 4, to lead to the deterioration of the output voltage.

On the other hand, the samples No. 5 exhibited large values as to both of the situation of development of reddish rust after salt spray and deterioration of the sensor output, as compared with the samples Nos. 1 to 3.

Referring to Fig. 4, it is understood from the result of X-ray diffraction on the surface layer part of the surface-treated sample No. 2 that the surface layer part mainly consisted of an amorphous phase. While a peak position of iron phosphate which may conceivably be formed by reaction between the phosphoric acid groups contained in the oil and components of the sintered stainless steel is shown by arrow in Fig. 4, no peak showing a crystal was observed.

Referring to Figs. 5A to 5C, it is understood that the surface layer part mainly consisting of the as-formed amorphous phase substantially soundly remains also after 500 hours, as obvious from the results of ESCA analysis of the elements, i.e., iron, oxygen and phosphorus forming the sample No. 2 in a depth of up to 0.2 µm from the surface. Figs. 5A, 5B and 5C show the results of analysis of the surface layer before the surface treatment, after the surface treatment, and after 500 hours from the salt spray.

### Example 2

14 types of samples Nos. 6 to 19 were prepared for each of shapes A and B which were similar to those in Example 1, as shown in Table 1. This Table also shows compositions of base materials, manufacturing methods and surface treatment conditions as to the respective samples. Oil containing phosphoric acid groups for surface treatment was prepared similarly to that in Example 1.

As to the shapes A and B, corrosion resistance values of the samples Nos. 6 to 19 were examined by a method similar to that in Example 1. The results are shown in Table 2.

From the samples Nos. 6 to 8 and Nos. 9 and 10, it is understood that the effect of the present invention is similarly recognized also in the SUS430 alloy which is lower than and inferior in corrosion resistance to the SUS434 alloy.

From the samples Nos. 11 and 12 and No. 13, it is understood that the effect of improving corrosion resistance is further recognized according to the present invention also in the improved SUS434 alloy prepared by adding Mo and Si to the SUS434 alloy for improving corrosion resistance.

From the samples Nos. 14 and 15, it is understood that the effect of the present invention is similarly recognized also as to the SUS434 alloy which was sintered gaseous hydrogen in order to avoid evaporation of Cr in vacuum sintering. It is conceivable that a gaseous hydrogen sintered product is inferior in corrosion resistance to a vacuum sintered product since an oxide of chromium was not sufficiently reduced in the gaseous hydrogen under the sintering temperature condition in this Example.

The samples Nos. 16 and 17 attained preferable results in corrosion resistance of the surfaces, while lubrication effects were reduced when a number of sizing steps were carried out with ring shapes having the same sizes as the samples B since the temperature of the oil for surface treatment was at a high level, and those partially causing seizure to the die were recognized.

Further, the effect of corrosion resistance remains unchanged even if dipping is carried out for at least 30 minutes as in the samples Nos. 18 and 19. Considering efficiency, this effect remains unchanged even if the time is within several times, generally within 1 minute. As to the time for the surface treatment, no influence is exerted on the effect whether the treatment is carried out immediately after the sintering or immediately before/after the sizing.

### Industrial Availability

According to the present invention, as hereinabove described, it is possible to obtain a gear for wheel speed detection which is mainly made of sintered stainless steel having excellent corrosion resistance by prescribed surface treatment. According to the inventive manufacturing method, further, equipment is simpler as compared with other surface treatment methods, treatment steps are extremely simple to enable continuation, and the manufacturing cost can be reduced. In particular, it is possible to manufacture a gear for wheel speed detection at a lower cost by using the oil which is employed for the surface treatment of the present invention also as lubricating oil for dimensional corrective sizing.

## Claims

1. A gear for wheel speed detection, comprising a surface layer part containing at least 5 atomic % and not more than 25 atomic % of phosporus, at least 30 atomic % and not more than 70 atomic % of oxygen, and at least 5 atomic % and not more than 50 atomic % of iron, and at least partially consisting of an amorphous phase, and a rest being made of sintered stainless steel, said gear being manufactured by molding raw material powder and thereafter sintering the same thereby preparing a sintered stainless steel product, and dipping said sintered stainless steel product in oil containing phosphoric acid groups, thereby forming said surface layer part.

2. A method of manufacturing a gear for wheel speed detection being made of sintered stainless steel, by molding raw material powder and thereafter sintering the same thereby preparing a sintered stainless steel product, and dipping said sintered stainless steel product in oil, being at a temperature of at least 15°C and not more than 70°C, containing phosphoric acid groups, thereby forming a surface layer part containing at least 5 atomic % and not more than 25 atomic % of phosphorus, at least 30 atomic % and not more than 70 atomic % of oxygen, and at least 5 atomic % and not more than 50 atomic % of iron and at least partially consisting of an amorphous phase on said sintered stainless steel product.

3. The method of manufacturing a gear for wheel speed detection in accordance with claim 2, wherein said oil is used as lubricating oil for corrective sizing, for continuously carrying out dipping in said oil and corrective sizing.

## Patentansprüche

1. Zahnrad zur Radgeschwindigkeitserfassung, umfassend einen Oberflächenschichtteil, der wenigstens 5 at.-% und nicht mehr als 25 at.-% Phosphor, wenigstens 30 at.-% und nicht mehr als 70 at.-% Sauerstoff und wenigstens 5 at.-% und nicht mehr als 50 at.-% Eisen enthält und wenigstens teilweise aus einer amorphen Phase besteht, und wobei ein Rest aus gesintertem rostfreiem Stahl gefertigt ist, wobei das Zahnrad hergestellt ist durch Formen von Ausgangsmaterialpulver und nachfolgendem Sintern desselben, wodurch das gesinterte Produkt aus rostfreiem Stahl gefertigt wird, und Eintauchen des gesinterten Produkts aus rostfreiem Stahl in Phosphorsäuregruppen enthaltendes Öl, wodurch der Oberflächenschichtteil gebildet wird.

2. Verfahren zum Herstellen eines Zahnrads zur Radgeschwindigkeitserfassung, welches aus gesintertem rostfreiem Stahl gefertigt ist, durch Formen von Ausgangsmaterialpulver und nachfolgendem Sintern desselben, wodurch ein gesintertes Produkt aus rostfreiem Stahl gefertigt wird, und Eintauchen des gesinterten Produkts aus rostfreiem Stahl in Öl, welches eine Temperatur von wenigstens 15 °C und nicht mehr als 70 °C aufweist und Phosphorsäuregruppen enthält, wodurch ein Oberflächenschichtteil gebildet wird, der wenigstens 5 at.-% und nicht mehr als 25 at.-% Phosphor, wenigstens 30 at.-% und nicht mehr als 70 at.-% Sauerstoff und wenigstens 5 at.-% und nicht mehr als 50 at.-% Eisen enthält und wenigstens teilweise aus einer amorphen Phase auf dem gesinterten Produkt aus rostfreiem Stahl besteht.

3. Verfahren zum Herstellen eines Zahnrads zur Radgeschwindigkeitserfassung nach Anspruch 2, worin das Öl als Schmieröl für korrigierende Dimensionierung verwendet wird, um das Eintauchen in das Öl und die korrigierende Dimensionierung kontiniuierlich auszuführen.

## Revendications

1. Roue dentée destinée à la détection de la vitesse d'une roue comprenant une partie de couche de surface contenant au moins 5 pour cent atomiques et pas plus de 25 pour cent atomiques de phosphore, au moins 30 pour cent atomiques et pas plus de 70 pour cent atomiques d'oxygène, et au moins 5 pour cent atomiques et pas plus de 50 pour cent atomiques de fer, et se composant au moins en partie d'une phase amorphe, et le reste du matériau étant composé d'acier inoxydable fritté, ladite transmission étant fabriquée par moulage d'un matériau brut en poudre et ensuite par frittage de celui-ci, ce qui permet la préparation d'un produit en acier inoxydable fritté, et par immersion dudit produit en acier inoxydable fritté dans de l'huile contenant des groupes d'acide phosphorique, formant ainsi ladite partie de couche de surface.

2. Procédé de fabrication d'une roue dentée destinée à la détection de la vitesse d'une roue et se composant d'acier inoxydable fritté, par moulage d'un matériau brut en poudre et ensuite par frittage de celui-ci, ce qui permet la préparation d'un produit en acier inoxydable fritté, et par immersion dudit produit en acier inoxydable fritté dans de l'huile à une température d'au moins 15°C et pas supérieure à 70°C, contenant des groupes d'acide phosphorique, ce qui permet la formation d'une partie de couche de surface contenant au moins 5 pour cent atomiques et pas plus de 25 pour cent atomiques de phosphore, au moins 30 pour cent atomiques et pas plus de 70 pour cent atomiques d'oxygène, et au moins 5 pour cent atomiques et pas plus de 50 pour cent atomiques de fer, et se composant au moins en partie d'une phase amorphe sur ledit produit en acier inoxydable fritté.

3. Procédé de fabrication d'une roue dentée destinée à la détection de la vitesse d'une roue selon la revendication 2, dans lequel ladite huile est utilisée en tant qu'huile de lubrification pour la rectification de mise à dimension, afin de mener à bien l'immersion en continu dans ladite huile et la rectification de mise à dimension.
